# EUROPÄISCHE PATENTSCHRIFT

(11) **EP 2 087 577 B1**
(45) Veröffentlichungstag und Bekanntmachung des Hinweises auf die Patenterteilung: **09.10.2013**
(21) Anmeldenummer: 07821370.9
(22) Anmeldetag: 16.10.2007
(51) Int. Cl.: H02K 11/00

(54) **ELEKTROMOTORISCHER STELLANTRIEB**
ELECTRIC MOTOR ACTUATING DRIVE
MÉCANISME DE COMMANDE ÉLECTROMOTEUR

(30) Priorität: 24.10.2006 DE 102006050067
(43) Veröffentlichungstag der Anmeldung: 12.08.2009
(73) Patentinhaber: Brose Fahrzeugteile GmbH & Co. KG, Würzburg, 97076 Würzburg (DE)
(72) Erfinder: BENKERT, Matthias, 97074 Würzburg (DE)
(74) Vertreter: Isarpatent
(86) Internationale Anmeldenummer: PCT/EP2007/061004
(87) Internationale Veröffentlichungsnummer: WO 2008/049759

(56) Entgegenhaltungen:
- DE-U1- 20 017 093
- GB-A- 2 174 253
- JP-A- 8 130 848
- JP-A- 10 117 460

## Beschreibung

Die Erfindung betrifft einen Stellantrieb, insbesondere für ein automatisch betätigbares Verstellelement eines Kraftfahrzeugs, mit einem Elektromotor und mit einer mit diesem verbundenen Leiterplatte für eine Steuerelektronik.

Ein derartiger Stellantrieb, der in einem Kraftfahrzeug insbesondere zur automatisch Betätigung eines Verstellelementes, beispielsweise eines Schiebedaches oder eines Seitenfensters, eingesetzt wird, weist üblicherweise einen Elektromotor als Aktuator mit einem Motor- oder Polgehäuse und eine Leiterplatte (printed circuit board, PCB) auf. Die Leiterplatte dient der mechanischen Befestigung und der in der Regel durch löten hergestellten elektrischen Verbindung von elektronischen Bauteilen mit Leiterbahnen der Leiterplatte.

Je nach Einsatzzweck eines solchen Elektromotors, der üblicherweise als Kommutator-Motor mit Kontäktbürsten ausgeführt ist, kann dieser im so genannten DC-Mode (Gleichstrombetrieb) oder beispielsweise zur Drehzahlregelung im so genannten PWM-Mode (Pulsweitenmodulationsbetrieb) betrieben werden. Des Weiteren können derartige Elektromotoren innerhalb eines Kraftfahrzeugs im Dauerbetrieb - wie beispielsweise als Lüftermotor - oder im Kurzzeitbetrieb - beispielsweise als Fensterheberantrieb oder im Türschlossbereich - eingesetzt sein.

Während im Hinblick auf die elektromagnetische Verträglichkeit (EMV) im Wesentlichen durch das so genannte Bürstenfeuer hervorgerufene elektromagnetische Emissionen zu berücksichtigen sind, kommen bei mittels PWM gesteuerten Stellantrieben auch die auf das hierdurch bedingte aktive Schalten zurückzuführenden Emissionsanteile in Betracht. Derartige Emissionen sind insbesondere durch die Kommutierungsvorgänge am Rotor- oder Anker-Bürsten-System des Elektromotors erzeugte Hochfrequenzstörungen, die den Funkempfang im Kraftfahrzeug, insbesondere im Frequenzbereich ab 150 kHz bis über 108 MHz hinaus stören können.

Die so genannte CISPR-Norm (Comite international special des perturbations radioelectriques) schreibt daher zur Einhaltung bestimmter Emissionsgrenzen normierte Messmethoden für derartige elektromagnetische Störungen vor, wobei Störungen in motorbetriebenen Fahrzeugen in der CISPR 25 standardisiert sind. Zur Einhaltung geforderter oder gewünschter Emissionsgrenzen werden daher üblicherweise bereits herstellerseitig Maßnahmen für eine geeignete Entstörung derartiger Elektromotoren ergriffen .

So ist es beispielsweise aus den Druckschriften DE 196 54 352 A1, DE 10 2004 037912 A1 oder WO 00/45499 (PCT-DE99/04060) bekannt, zur Entstörung derartiger Elektromotoren kapazitive und/oder induktive Entstörglieder vorzusehen. Für eine elektrisch leitende Verbindung einer Mittelanzapfung einer Kondensatorkombination zu deren Kontaktierung mit dem Motorgehäuse ist es beispielsweise aus der DE 198 58 627 A1 bekannt, eine metallische Kontaktfeder nach Art einer Blattfeder vorzusehen, die einerseits federnd am Motorgehäuse anliegt und andererseits mittels einer Lötverbindung an einer Leiterbahn der Leiterplatte mechanisch gehalten und elektrisch kontaktiert ist.

Aus der DE 200 17 093 U1, welche den nächstliegenden Stand der Technik darstellt, ist ein Massekontakt für ein elektrisches Gerät, insbesondere einen elektrischen Motor, bekannt, bei dem ein Kontaktkörper, der einen elastisch verformbaren Kern und einen den Kern umgebenden flexiblen und elektrisch leitenden Mantel aufweist, unter elastischer Verformung zwischen eine Leiterplatte und ein Gehäuse des Gerätes geklemmt wird.

Der Erfindung liegt die Aufgabe zugrunde, eine besonders geeignete leitende Verbindung zwischen einer Leiterplatte oder einer Elektronikplatine (PCB) und einem Motorgehäuse eines Elektromotors, insbesondere eines Aktuators für einen Stellantrieb eines Kraftfahrzeugs, beispielsweise eines Schiebedach oder Fensterheberantriebs, anzugeben.

Diese Aufgabe wird erfindungsgemäß gelöst durch die Merkmale des Anspruchs 1. Dazu ist ein aus einem elektrisch leitenden Kunststoff bestehendes Verbindungselement vorgesehen. Das Verbindungselement weist zweckmässigerweise ein erstes Kontaktende auf, das zur Kontaktanlage am Motorgehäuse, d.h. insbesondere für einen sicheren elektrischen sowie ausreichenden mechanischen Haltekontakt ausgebildet ist. Das vorzugsweise flexible Verbindungselement ist an dessen dem ersten Kontaktende abgewandten zweiten Kontaktende zur Kontaktverbindung mit der Leiterplatte ausgebildet.

Die Leiterplatte kann elektronische Bauteile sowohl eines Entstörgliedes oder einer Entstörschaltung zur Unterdrückung elektromagnetischer Störungen des Elektromotors als auch einer Steuerschaltung oder -elektronik zur Motorsteuerung enthalten.

Das Verbindungselement ist dabei vorzugsweise derart gestaltet oder geformt, dass sowohl die Kontaktverbindung zum Motorgehäuse als auch die Kontaktverbindung zur Leiterplatte als rein mechanische, d.h. kraft-, reib- und/oder formschlüssige Verbindung und dabei insbesondere lötfrei ausgeführt ist.

Die Erfindung geht dabei von der Überlegung aus, dass eine sowohl in elektrischer als auch in mechanischer Hinsicht zuverlässige Verbindung oder Masseverbindung zwischen einem Motorgehäuse eines Elektromotors und einer diesem zugeordneten Leiterplatte an unterschiedliche und auch bei beengten Raum- und Montageverhältnissen realisiert werden kann durch ein praktisch in beliebiger Form herstellbares und einfach zu verarbeitendes sowie ausschließlich mechanisch gehaltenes Verbindungselement. Hierzu ist zwar grundsätzlich ein die elektrisch leitenden und mechanisch federelastischen Eigenschaften aufweisender metallischer Werkstoff, insbesondere ein Federstahl, verwendbar. Dessen Formgestaltung oder Formgebung sind jedoch fertigungstechnisch oder aber hinsichtlich einer möglichst einfachen und effektiven Herstellung vergleichsweise enge Grenzen gesetzt.

Dem gegenüber ist bei Verwendung eines elektrisch leitenden Kunststoffes die Formgebung des aus einem geeigneten Kunststoffmaterial bestehenden Verbindungselementes praktisch beliebig, indem der insbesondere elastomere und somit flexible Kunststoff gestanzt, geschnitten, gepresst, extrudiert oder durch ein Spritzgussverfahren in die gewünschte Form des Verbindungselementes gebracht werden kann. Die Verbindung mit elektrisch und mechanisch auf der Leiterplatte montierten Entstörgliedern in Form von passiven und/oder aktiven elektronischen Bauelementen erfolgt über eine Leiterbahn oder einen Leiterplattenkontakt auf der Leiterplatte.

In erfindungsgemäßer Ausgestaltung weist das vorzugsweise einstückige Verbindungselement einen sich entlang des Verbindungsweges zwischen dem Motorgehäuse und der Leiterplatte erstreckenden Verbindungsschenkel sowie einen daran vorzugsweise angeformten Kontaktschenkel zur Ausbildung des ersten Kontaktendes auf. Durch Anformung eines Federschenkels an der dem Kontaktschenkel gegenüberliegenden Seite des Verbindungselementes weist das Verbindungselement auf einfache Art und zuverlässige Weise die gewünschte oder geforderte elastische Eigenschaft auf. Die elektrische Eigenschaft des Verbindungselements wird durch eine entsprechende Dotierung des verwendeten leitfähigen Kunststoffmaterials bereitgestellt.

Das erste Kontaktende des Verbindungselements weist eine Kontaktfläche auf, mit der das Verbindungselement am Motorgehäuse, vorzugsweise gehäuseaussenseitig, anliegt. Hierzu ist zweckmässigerweise der Kontaktschenkel auf dessen dem Federschenkel abgewandten Schenkelaussenseite unter Ausbildung einer rampenartigen Anlagekontur zumindest teilweise schräg verlaufend ausgeführt.

Weitere vorteilhafte Ausgestaltungen und Varianten der Erfindung sind in den Unteransprüchen angegeben.

Die mit der Erfindung erzielten Vorteile bestehen insbesondere darin, dass durch Verwendung eines mechanischen Verbindungselementes aus einem elektrisch leitenden und flexiblen, vorzugsweise elastomeren, Kunststoffmaterial auf einfache Art und Weise eine elektrisch leitende Verbindung, insbesondere eine zuverlässige Masseverbindung für eine Motorentstörung, zwischen einem Motorgehäuse eines Elektromotors und einer Leiterplatte hergestellt werden kann. Aufgrund der im Vergleich zu einem metallischen Werkstoff weichen federnden sowie dämpfenden Eigenschaft des Kunststoffes ist eine geräuschmindernde Dämpfung der Leiterplatte ermöglicht. Durch die Verwendung eines Kunststoffmaterials für ein solches Verbindungselement zur Motorentstörung kann das Verbindungselement als zweite Komponente in ein die Steuer- und/oder Entstörelektronik für den Elektromotor aufnehmendes Kunststoffgehäuse mit eingespritzt werden. Somit kann der Kunststoff die gewünschte elastische Funktion und die erforderliche elektrische Leitfunktion miteinander verbinden.

Nachfolgend wird ein Ausführungsbeispiel der Erfindung anhand der Zeichnung näher erläutert. Darin zeigen:
- FIG 1: in perspektivischer Darstellung ausschnittsweise ein erfindungsgemäßes Verbindungselement im Einbauzustand zwischen einem Motorgehäuse und einer Leiterplatte,
- FIG'2 und 3: in perspektivischer Darstellung das Verbindungselement in zwei unterschiedlichen Ansichten,
- FIG 4: in einem elektrischen Schaltbild eine Entstörschaltung als EMV-Filter mit einer Masseverbindung zum Elektromotor, und
- FIG 5: in einem Spannungs-/Frequenz-Diagramm das Emissionsverhalten eines Elektromotors mit einer Masseverbindung aus elektrisch leitfähigem Kunststoff im Vergleich zu einer gelöteten und keiner Masseverbindung.

Einander entsprechende Teile sind in allen Figuren mit den gleichen Bezugszeichen versehen.

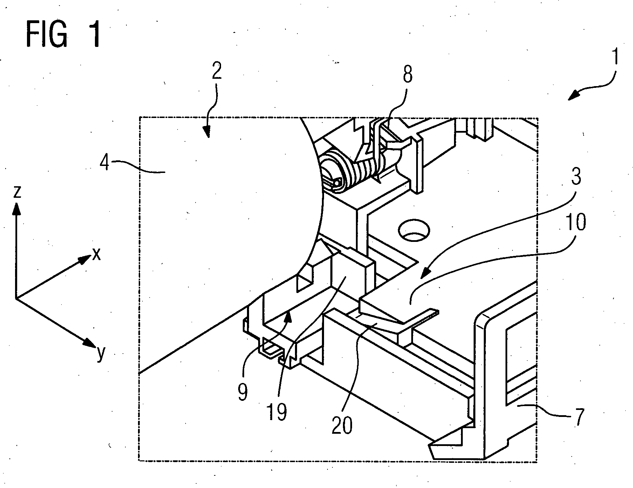

FIG 1 zeigt ausschnittsweise einen Stellantrieb 1 mit einem Elektromotor 2 und einer Leiterplatte 3. Der Elektromotor 2 ist in dessen Verwendung als Aktuator in einem Stellantrieb eines Kraftfahrzeugs, beispielsweise eines Schiebedach- oder Fensterheberantriebs, üblicherweise als so genannter Innenläufer ausgeführt.

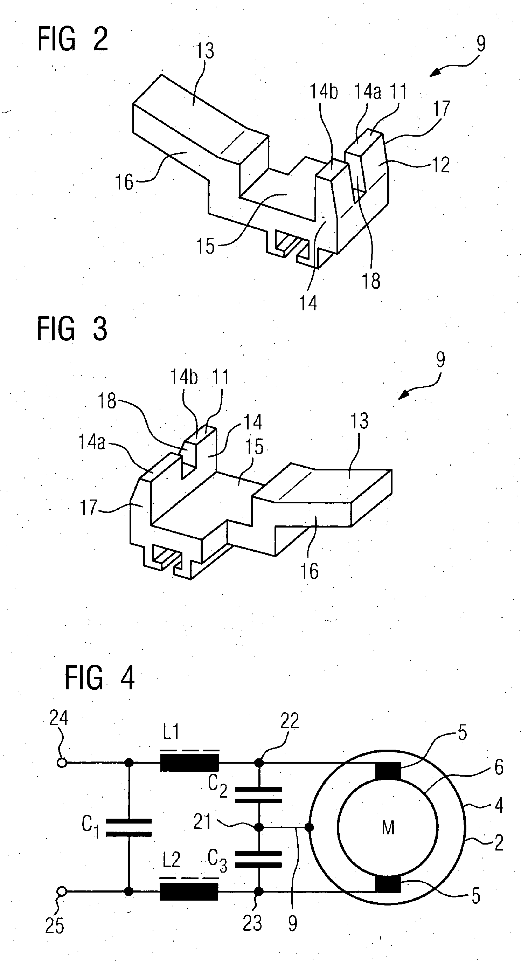

Der Elektromotor 2 weist hierzu in an sich bekannter Art und Weise innerhalb eines Motor- oder Polgehäuses 4 einen drehbeweglichen Rotor und einen diesen umgebenden unbeweglichen Stator auf, der als Elektromagnet oder bei einem vergleichsweise kleinen Elektromotor bzw. Kleinmotor als Permanent- oder Dauermagnet ausgeführt sein kann. Der auch als Anker bezeichnete Rotor ist mit einer Wicklung versehen, die über einen Kommutator einen ständigen periodischen Polwechsel an der Ankerwicklung gewährleistet. Hierzu sind üblicherweise zwei Kontaktbürsten 5 vorgesehen, die mit einer bestimmten Anpresskraft an gegenüberliegenden Seiten am mit dem Rotor des Elektromotors 2 rotierenden Kommutator 6 anliegen (FIG 4).

Der Rotor des Elektromotors 2 ist auf einer im Motorgehäuse 4 gelagerten (nicht dargestellten ) Motorwelle angeordnet, die sich bezogen auf das in FIG 1 dargestellte Koordinatensystem in x-Richtung erstreckt. In der dargestellten integralen, kompakten Bauweise des Stellantriebs 1 sind der Elektromotor 2 und die in nicht näher dargestellter Art und Weise mit elektronischen Bauteilen bestückte Leiterplatte 3 miteinander verbunden. Dabei verläuft die in einem teilweise dargestellten Elektronikgehäuse oder Gehäuseteil 7 angeordnete Leiterplatte 3 im Wesentlichen quer zur Motorwelle oder-achse (x-Richtung) des Elektromotors 2 in γ-Richtung. Das ausschnittsweise dargestellte, insbesondere aus Kunststoff bestehende Gehäuseteil 7 ist beispielsweise ein deckel- oder kappenartiges Gehäuseelement zur Aufnahme des die biege- oder federelastisch gelagerten Kontaktbürsten 5 und deren Anschlusselemente enthaltenden Bürstensystems 8 des Elektromotors 2.

Zwischen dem Motorgehäuse 4 des Elektromotors 2 und der Leiterplatte 3 ist ein Verbindungselement 9 vorgesehen. Das Verbindungselement 9 stellt eine elektrisch leitende oder leitfähige Verbindung nach Art einer Masseverbindung zwischen dem üblicherweise metallischen Motorgehäuse 4 und einer Leiterbahn 10 her, die nach Art eines herkömmlichen Printed Circuit Board (PCB) auf der Leiterplatte 3, beispielsweise als Massekontakt, vorgesehen ist. Das Verbindungselement 9 besteht aus einem elektrisch leitenden Kunststoff, insbesondere aus einem leitfähigen Elastomer oder Thermoplast.

Das Verbindungselement 9 weist aufgrund der Verwendung eines für eine gewünschte oder erforderliche elektrische Leitfähigkeit einerseits entsprechend dotierten und andererseits flexiblen Kunststoffes eine ausreichende mechanische Biegeelastizität für eine zuverlässige mechanische Befestigung des Verbindungselementes 9 zwischen der Leiterplatte 3 und dem Motorgehäuse 4 auf. Hierzu ist das Verbindungselement 9 im Ausführungsbeispiel einerseits am Motorgehäuse 4 außenseitig, d. h. an dessen Au-ßenwandung vorzugsweise reibschlüssig gehalten und mit der Leiterplatte 3 zweckmäßigerweise sowohl reibschlüssig als auch zusätzlich formschlüssig verbunden.

Hierzu weist das Verbindungselement 9 zweckmäßigerweise die aus den FIG 2 und 3 vergleichsweise deutlich ersichtliche geometrische Form auf. So bildet das Verbindungselement 9 ein erstes Kontaktende 11 mit einer im Montagezustand gemäß FIG 1 am Motorgehäuse 4 anliegenden Kontaktfläche 12 aus. Ein gegenüberliegendes zweites Kontaktende 13 dient zur elektrischen Kontaktierung und - je nach Ausführungsform - gegebenenfalls mechanischen Befestigung des Verbindungselementes 9 in dessen Verbindung mit der Leiterplatte 3.

In einer Grundform ist das Verbindungselement 9 etwa U-förmig, wobei einer der U-Schenkel als Kontaktschenkel 14 das erste Kontaktende 11 mit der Kontaktfläche 12 ausbildet. Der Kontaktschenkel 14 verläuft quer zu einem Basis- oder Verbindungsschenkel 15 des U-förmigen Verbindungselementes 9 und erstreckt sich somit normal oder senkrecht zur vom Verbindungsschenkel 15 aufgespannten Verbindungsebene.

Dem an den Verbindungsschenkel 15 angeformten und gegenüber diesem etwa L-förmig abgewinkelte Kontaktschenkel 14 gegenüberliegend ist an den weiteren U-Schenkel des Verbindungselementes 9 ein Federschenkel 16 etwa Z-förmig angeformt. Dieser bildet freiendseitig und/oder entlang dessen Schenkelfläche das zweite Kontaktende 13 des Verbindungselementes 9. Der an den Verbindungsschenkel 15 des Verbindungselementes 9 ebenfalls angeformte Federschenkel 16 ist schräg verlaufend und gegenüber der durch den Verbindungsschenkel 15 aufgespannten Verbindungsebene ansteigend geformt. Infolge dieser schräg verlaufenden Ausformung des Federschenkels 16 kann das Verbindungselement 9 zur Erzeugung einer gewünschten Anpresskraft mit einer entsprechenden mechanischen Vorspannung in die Verbindung mit der Leiterplatte 3 mechanisch vorgespannt werden.

Eine entsprechende Anpresskraft des Verbindungselementes 9 in der mechanischen Verbindung mit dem Motorgehäuse 4 wird durch die biegeelastische Eigenschaft des Kontaktschenkels 14 erzielt. Zur Anpassung der an diesem Kontaktende 11 vorgesehenen Kontaktfläche 12 an die Außenkontur des Motorgehäuses 4 ist der Kontaktschenkel 14 an dessen dem Federschenkel 16 abgewandten Schenkelaußenseite mit einer rampenartigen Abschrägung 17 versehen. In diesem Bereich der rampenartigen Abschrägung 17 ist eine Einkerbung 18 im Kontaktschenkel 14 vorgesehen, so dass der Kontaktschenkel 14 zwei voneinander unabhängig biegeelastische Schenkelbereiche oder Schenkelabschnitte 14a,14b aufweist.

In der in FIG 1 dargestellten Montageposition liegt somit lediglich der im Ausführungsbeispiel vergleichsweise breite Schenkelabschnitt 14a am Motorgehäuse 4 an, während der weitere Schenkelabschnitt 14b einen stirnseitigen Hintergriff am Motorgehäuse 4 ausbildet. Durch diesen Hintergriff ist eine zusätzliche formschlüssige Verbindung am Motorgehäuse 4 bzw. am Elektromotor 2 hergestellt, so dass im Zusammenwirken des Schenkelabschnitts 14b mit einer Gehäuseanlage 19 eine zuverlässige Positionierung und verschiebesichere Befestigung des Verbindungselementes 9 gewährleistet ist.

In der Verbindung mit der Leiterplatte 3 ist der Federschenkel 16 des Verbindungselementes 9 zumindest teilweise in eine in der Leiterplatte vorgesehene rampenartige Aussparung 20 formschlüssig eingesetzt oder eingepresst. Aufgrund dieses Verbindungskonzeptes des Verbindungselementes 9 sowohl mit dessen ersten Kontaktende 11 als auch mit dessen zweiten Kontaktende 13 ist eine rein mechanische und somit lösbare sowie insbesondere lötfreie Befestigung sowohl in der Verbindung mit dem Motorgehäuse 4 als auch in der Verbindung mit der Leiterplatte 3 hergestellt. Dies ermöglicht eine besonders einfache und fehlersichere Montage des Verbindungselementes 9 zur Herstellung einer Masse- oder Entstörverbindung zwischen der Leiterplatte 3 und dem Motorgehäuse 4 des Elektromotors 2.

FIG 4 zeigt ein Schaltbild des Elektromotors 2 mit einem Kondensatorpaar C₂, C₃, deren Mittelanzapfung 21 über das Verbindungselement 9 mit dem Motorgehäuse 4 elektrisch leitend verbunden ist. Die jeweils anderen Kondensatoranschlüsse 22, 23 sind mit den Bürstenkontakten 5 einerseits und über Spulen L₁, L₂ an Motoranschlüsse 24 bzw. 25 geführt, zwischen die ein weiterer Kondensator C₁ geschaltet ist. Die entsprechende Entstörschaltung mit den Kondensatoren C₂ und C₃ - sowie gegebenenfalls mit den Spulen L₁, L₂ und dem weitern Kondensator C₁ - bildet ein in nicht näher dargestellter Art und Weise auf der Leiterplatte 3 montiertes Entstörglied oder einen EMV-Filter des Elektromotors 2.

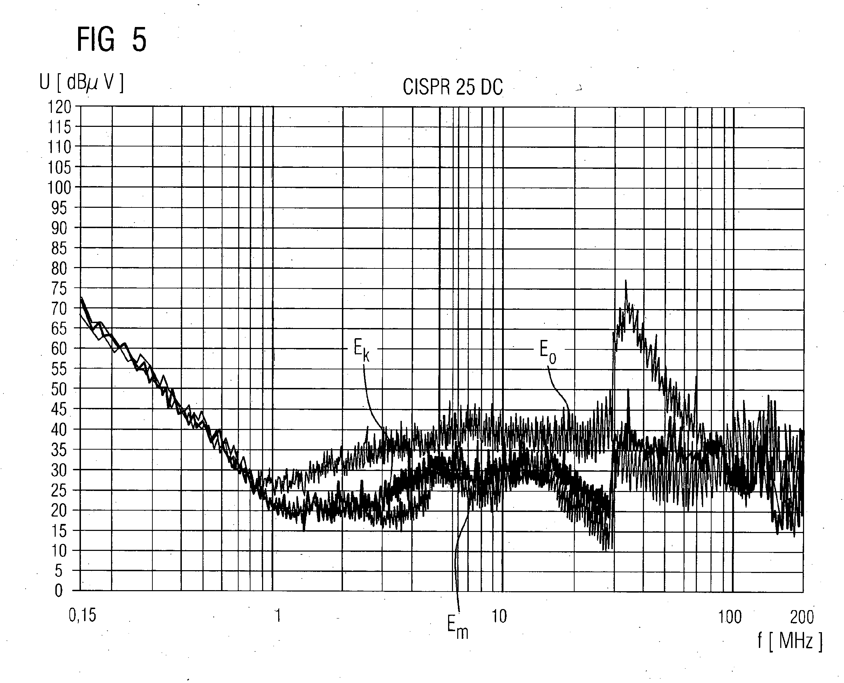

FIG 5 zeigt in einem Diagramm den Emissionsverlauf E_{K} des Stellantriebs 1 bzw. des Elektromotors 2 mit einem aus elektrisch leitfähigem Kunststoff bestehenden Verbindungselement 9 im Vergleich einerseits zu einem Emissionsverlauf Eₘ bei einer gelöteten Masse- oder Entstörverbindung und andererseits zu einem Emissionsverlauf E₀ ohne Massever- oder Masseanbindung. Dabei sind auf der Abszisse die Frequenz f in MHz logarithmisch und auf der Ordinate die Spannung V in dBµV abgetragen.

Ersichtlich ist, dass die Emissionsverläufe E_{K} bei einer aus elektrisch leitfähigem Kunststoff bestehenden Verbindung sowie der Emissionsverlauf Eₘ einer gelöteten Verbindung zu kleineren Spannungswerten hin und somit unterhalb des Emissionsverlaufs E₀ ohne Masseverbindung liegen. Zudem weicht der Emissionsverlauf E_{K} bei Verwendung eines aus leitfähigem Kunststoff bestehenden Verbindungselementes 9 nur geringfügig und insbesondere innerhalb zulässiger Grenzen vom Emissionsverlauf Eₘ bei einer rein metallischen, gelöteten Masseverbindung ab.

Der bei allen dargestellten Emissionsverläufen E_{K}, Eₘ und E₀ bei etwa 50 mHz charakteristische Anstieg der Emission ist auf das für einen derartigen Elektromotor 2 typische so genannten "Bürstenfeuers" zurückzuführen.

Für die spezifischen Anforderungen einer Entstörung eines solchen Elektromotors 2 bietet die Verwendung eines elektrisch leitenden Kunststoffes, insbesondere eines elektrisch leitenden Elastomers, somit ausreichend gute elektrische Eigenschaften, obwohl aufgrund des vergleichsweise hohen elektrischen Widerstandes von derartigen Kunststoffen deren Leitwerte gegenüber metallischen Werkstoffen eher ungünstig erscheinen. Durch die vergleichsweise weichen, federnden und dämpfenden Eigenschaften des aus elektrisch leitendem Kunststoff bestehenden Verbindungselementes 9 bietet dieses insbesondere hinsichtlich einer praktisch beliebigen Formgebung und einer wünschenswerten Geräuschreduzierung erhebliche Vorteile.

## Patentansprüche

1. Stellantrieb (1), insbesondere für ein Kraftfahrzeug, mit
- einem ein Motorgehäuse (4) aufweisenden Elektromotor (2)
- einer mit dem Motorgehäuse (4) verbundenen Leiterplatte (3) für eine Steuerelektronik zur Motorsteuerung und/oder für Entstörmittel zur Unterdrückung elektromagnetischer Störungen des Elektromotors (2) und
- einem flexiblen Verbindungselement (9) mit einem zur Kontaktanlage am Motorgehäuse (4) ausgebildeten ersten Kontaktende (11) und mit einem zur Kontaktverbindung mit der Leiterplatte (3) ausgebildeten zweiten Kontaktende (13),
**dadurch gekennzeichnet, dass** das Verbindungselement (9) aus einem elektrisch leitenden Kunststoff besteht und einen Verbindungsschenkel (15) sowie einen das erste Kontaktende (11) bildenden Kontaktschenkel (14) und einen gegenüber diesem beabstandeten und das zweite Kontaktende (13) bildenden Federschenkel (16) aufweist.

2. Stellantrieb (1) nach Anspruch 1,
**dadurch gekennzeichnet, dass** der Kontaktschenkel (14) biegeelastisch ist.

3. Stellantrieb (1) nach Anspruch 1 oder 2, **dadurch gekennzeichnet, dass** das erste Kontaktende (11) gehäuseaussenseitig am Motorgehäuse (4) anliegt.

4. Stellantrieb (1) nach einem der Ansprüche 1 bis 3, **dadurch gekennzeichnet, dass** das erste Kontaktende (11) eine am Motorgehäuse (4) anliegende Kontaktfläche (12) aufweist.

5. Stellantrieb (1) nach einem der Ansprüche 2 bis 4, **dadurch gekennzeichnet, dass** der Kontaktschenkel (14) auf dessen dem Federschenkel (15) abgewandten Schenkelaussenseite ein rampenartig abgeschrägte Anlagekontur (18) aufweist.

6. Stellantrieb (1) nach einem der Ansprüche 1 bis 5, **dadurch gekennzeichnet, dass** das zweite Kontaktende (13) in einen Ausschnitt (20) der Leiterplatte (3) eingreift.

7. Stellantrieb (1) nach einem der Ansprüche 2 bis 6, **dadurch gekennzeichnet, dass** das Verbindungselement (9) ein einstückiges Formteil mit L-förmig abgewinkeltem Kontaktschenkel (14) ist.

8. Stellantrieb (1) nach einem der Ansprüche 2 bis 7, **dadurch gekennzeichnet, dass** das Verbindungselement (9) ein einstückiges Formteil mit Z-förmig abgekröpftem Federschenkel (16) ist.

9. Stellantrieb (1) nach einem der Ansprüche 1 bis 7, **dadurch gekennzeichnet, dass** das Verbindungselement (9) mit dem Motorgehäuse (4) reibschlüssig und mit der Leiterplatte (3) reibund/oder formschlüssig verbunden ist.

10. Stellantrieb (1) nach einem der Ansprüche 1 bis 7, **dadurch gekennzeichnet, dass** das Verbindungselement (9) als Spritzkomponente in eine die Leiterplatte (3) aufnehmendes Kunststoffgehäuse (7) integriert ist.

## Claims

1. Actuating drive (1), in particular for a motor vehicle, comprising:
- an electric motor (2) comprising a motor housing (4)
- a printed circuit board (3), connected to the motor housing (4), for control electronics for controlling the motor and/or for dejamming means for suppressing electromagnetic interferences of the electric motor (2), and
- a flexible connection element (9) comprising a first contact end (11), formed to lie in contact against the motor housing (4), and comprising a second contact end (13), formed for the contact connection to the printed circuit board (3),
**characterised in that** the connection element (9) consists of an electrically conductive plastics material and comprises a connection limb (15), as well as a contact limb (14), forming the first contact end (11), and a spring limb (16), opposite this at a distance and forming the second contact end (13).

2. Actuating drive (1) according to claim 1, **characterised in that** the contact limb (14) is resilient in flexion.

3. Actuating drive (1) according to either claim 1 or claim 2, **characterised in that** the first contact end (11) lies against the motor housing (4) on the outside of the housing.

4. Actuating drive (1) according to any one of claims 1 to 3, **characterised in that** the first contact end (11) comprises a contact face (12) lying against the motor housing (4).

5. Actuating drive (1) according to any one of claims 2 to 4, **characterised in that** the contact limb (14) comprises a contact contour (18), bevelled in the manner of a ramp, on the limb outer face thereof remote from the spring limb (15).

6. Actuating drive (1) according to any one of claims 1 to 5, **characterised in that** the second contact end (13) engages in a clearance (20) in the printed circuit board (3).

7. Actuating drive (1) according to any one of claims 2 to 6, **characterised in that** the connection element (9) is a single-piece moulded part comprising a contact limb (14) angled in an L shape.

8. Actuating drive (1) according to any one of claims 2 to 7, **characterised in that** the connection element (9) is a single-piece moulded part comprising a spring limb (16) bent in a Z shape.

9. Actuating drive (1) according to any one of claims 1 to 7, **characterised in that** the connection element (9) is connected to the motor housing (4) in a frictional fit and to the printed circuit board (3) in a frictional and/or positive fit.

10. Actuating drive (1) according to any one of claims 1 to 7, **characterised in that** the connection element (9) is integrated, as an injection-moulded part, into a plastics material housing (7) which accommodates the printed circuit board (3).

## Revendications

1. Mécanisme de commande (1), en particulier pour un véhicule automobile, comprenant:
- un moteur électrique (2) présentant un carter de moteur (4),
- un circuit imprimé (3) relié au carter de moteur (4) pour un système électronique de commande de moteur et/ou pour des moyens de blindage destinés à supprimer les perturbations électromagnétiques du moteur électrique (2) et
- un élément de liaison flexible (9) avec une première extrémité de contact (11) conçue pour l'appui du contact sur le carter de moteur (4) et avec une seconde extrémité de contact (13) conçue pour la liaison de contact avec le circuit imprimé (3),
**caractérisé en ce que** l'élément de liaison (9) est composé d'une matière plastique électroconductrice et présente une branche de liaison (15) ainsi qu'une branche de contact (14) formant la première extrémité de contact (11) et une branche de ressort (16) espacée de celle-ci et formant la seconde extrémité de contact (13).

2. Mécanisme de commande (1) selon la revendication 1, **caractérise en ce que** la branche de contact (14) peut être pliée de manière élastique.

3. Mécanisme de commande (1) selon la revendication 1 ou 2, **caractérisé en ce que** la première extrémité de contact (11) est placée du côté extérieur au carter sur le carter du moteur (4).

4. Mécanisme de commande (1) selon une des revendications 1 à 3, **caractérisé en ce que** la première extrémité de contact (11) présente une surface de contact (12) située sur le carter de moteur (4).

5. Mécanisme de commande (1) selon une des revendications 2 à 4, **caractérisé en ce que** la branche de contact (14) présente sur son côté extérieur de branche opposé à la branche de ressort (15) un contour d'appui (18) incliné en forme de rampe.

6. Mécanisme de commande (1) selon une des revendications 1 à 5, **caractérisé en ce que** la seconde extrémité de contact (13) vient s'appliquer sur une découpe (20) du circuit imprimé (3).

7. Mécanisme de commande (1) selon une des revendications 2 à 6, **caractérisé en ce que** l'élément de liaison (9) est une pièce moulée d'un seul tenant avec une branche de contact (14) pliée en forme de L.

8. Mécanisme de commande (1) selon une des revendications 2 à 7, **caractérisé en ce que** l'élément de liaison (9) est une pièce moulée d'un seul tenant avec une branche de ressort (16) coudée en forme de Z.

9. Mécanisme de commande (1) selon une des revendications 1 à 7, **caractérisé en ce que** l'élément de liaison (9) est relié au carter de moteur (4) par complémentarité de friction et au circuit imprimé (3) par complémentarité de friction et/ou de forme.

10. Mécanisme de commande (1) selon une des revendications 1 à 7, **caractérisé en ce que** l'élément de liaison (9) est intégré sous la forme d'un composant pulvérisé dans un boîtier en plastique (7) recevant le circuit imprimé (3).
